# EUROPEAN PATENT APPLICATION

(11) **EP 3 422 676 A1**
(43) Date of publication of application: **02.01.2019**
(21) Application number: 17305800.9
(22) Date of filing: 27.06.2017
(51) Int. Cl.: H04L 29/12

(54) **METHOD AND DEVICE FOR FORWARDING A DATA PACKET**

(71) Applicant: Thomson Licensing, 92130 Issy-les-Moulineaux (FR)
(72) Inventor: LE SCOUARNEC, Nicolas, 35576 Cesson-Sévigné Cedex (FR); GOUACHE, Stéphane, 35576 Cesson-Sévigné Cedex (FR); BICHOT, Guillaume, 35576 Cesson-Sévigné Cedex (FR)
(74) Representative: Vidon Brevets & Stratégie

(57) **Abstract**

In a context of a packet forwarding device, operating packet field translations as packets are forwarded between two networks, a salient idea is to allocate deterministically translated identifiers (such as for example port numbers in IPv4 NAT), in the packet forwarding device, the allocation using a deterministic operator depending only on data information present in or derived from the packet to forward. The data information of the packet on which the deterministic operator is applied are for example a source address of a communication protocol and an identifier of an encapsulated communication protocol. More generally the data information (for deterministically allocating translated identifiers) characterize the packet as belonging to a particular data flow and/or logical connection. Thanks to this salient idea, in a context of recovery procedure, whenever a backup device becomes active and receives packets from an existing logical connection / data flow, it can recover the decision that was taken by the former packet forwarding device without requiring explicit information from the former packet forwarding device, advantageously recovering the state from the departed packet forwarding device. No replication protocol or pro-active state replication is needed between a packet forwarding device and a backup device, advantageously saving protocol complexity, implementation cost, memory, processing resources and network bandwidth.

## Description

### 1. TECHNICAL FIELD

The present disclosure relates to the domain of networking, packet forwarding and address translation between different networks or subnetworks.

### 2. BACKGROUND ART

Network Address Translation (NAT), is a well-known technique to limit the use of public IP addresses for interconnecting a set of devices to the Internet, both for cost and security reasons. Access networks, be they residential or enterprise, mask their devices behind a single IP address, through a NAT. This is done both for dealing with the exhaustion of IPv4 addresses, and to provide isolation between the private local network and the public Internet for security and privacy purposes. NAT may also be used between access networks and core networks involving a large set of devices depending on a single NAT device for their Internet connection.

The traditional approach to reliability of such equipment is to set up a master/slave, which basically consists in continuously replicating the state table of the NAT device to a spare device. This can be achieved, for example through PFSync, (that has been introduced with OpenBSD 3.5 in 2004) for the popular Packet Filter firewall, or using *conntrackd* (introduced in Linux 2.6.18 in 2006) for the widely available *iptable.* The state replication mechanism may either be asynchronous, allowing the "master" to send the packet without waiting for the replication acknowledgment from the slave, or synchronous if it waits for the acknowledgement of the replication before sending the packet. In both cases state replication requires a master slave network connection and a slave being up and running to update state continuously as the master state evolves. Existing techniques to reliability of address translation imply a level of complexity in the protocols for the state replication and in the processing required in both the master and the slave devices for maintaining a correct level of reliability. Some new packet forwarding techniques are required for reducing the system complexity while keeping a correct level of reliability.

### 3. SUMMARY

In a context of a packet forwarding device, operating packet field translations as packets are forwarded between two networks, a salient idea is to allocate deterministically translated identifiers (such as for example port numbers in IPv4 NAT), in the packet forwarding device, the allocation using a deterministic operator depending only on data information present in or derived from the packet to forward. The data information of the packet on which the deterministic operator is applied are for example a source address of a communication protocol and an identifier of an encapsulated communication protocol. More generally the data information (for deterministically allocating translated identifiers) characterize the packet as belonging to a particular data flow and/or logical connection. Thanks to this salient idea, in a context of recovery procedure, whenever a backup device becomes active and receives packets from an existing logical connection / data flow, it can recover the decision that was taken by the former packet forwarding device without requiring explicit information from the former packet forwarding device, advantageously recovering the state from the departed packet forwarding device. No replication protocol or pro-active state replication is needed between a packet forwarding device and a backup device, advantageously saving protocol complexity, implementation cost, memory, processing resources and network bandwidth.

To that end a method for forwarding a first data packet from a first network to a second network is disclosed. The method comprises:
- receiving the first data packet from the first network, the first data packet comprising a first source address of a protocol and a first identifier;
- determining a first deterministic identifier by a first deterministic operator on parameters comprising the first source address and the first identifier;
- forwarding the first data packet to the second network, wherein the first source address and the first identifier are translated into respectively a translated source address of the protocol and the first deterministic identifier.

According to a particularly advantageous variant, the first data packet further comprises a first destination address, the parameters further comprising the first destination address.

According to another particularly advantageous variant, the method further comprises determining a second deterministic identifier of an address among a plurality of addresses of the protocol, by a second deterministic operator on the parameters, the translated source address corresponding to the determined second deterministic identifier.

According to another particularly advantageous variant, the first data packet further comprises a sequence number of a transport protocol, the method further comprising determining a third deterministic identifier by a third deterministic operator on the parameters and translating a part of the most significant bits of the sequence number into the determined third deterministic identifier.

According to another particularly advantageous variant, the first deterministic operator is number generator seeded with the parameters

According to another particularly advantageous variant, the first deterministic operator is a hash function of the parameters.

According to another particularly advantageous variant, in case the first deterministic identifier collides with a previous first deterministic identifier, previously determined from the first deterministic operator on previous parameters, being different from the parameters, a further first deterministic identifier is determined, different from the first deterministic identifier, the first identifier being translated with the further first deterministic identifier.

According to another particularly advantageous variant, the method further comprises sending an information item to a backup device only in case the first deterministic identifier collides with the previous first deterministic identifier, the information item comprising the parameters associated with the further deterministic identifier.

In a second aspect, a method for recovering packet forwarding ethodis also disclosed. The device comprises:
- receiving an indication of a failure of a processing device, the processing device having:
   ∘ received a first data packet from a first network, the first data packet comprising a first source address of a protocol and a first identifier;
   ∘ determined a deterministic identifier from a deterministic operator on parameters comprising the first source address and the first identifier;
   ∘ forwarded the first data packet to a second network, wherein the first source address and the first identifier have been translated into respectively a translated source address of the protocol and the deterministic identifier;
- receiving a further first data packet from the first network, the further first data packet comprising the first source address of a protocol and the first identifier;
- determining the deterministic identifier from the deterministic operator on the parameters;
- forwarding the further first data packet to the second network, wherein the first source address and the first identifier have been translated into respectively the translated source address of the protocol and the deterministic identifier.

According to a particularly advantageous variant, the method further comprises:
- receiving from the processing device, prior to the processing device failure, an information item representative of a deterministic operator conflict between the parameters and previous parameters, the information item comprising the first source address and the first identifier associated with the further deterministic identifier;
- receiving a second data packet from the second network, the second data packet comprising a second source address, a second identifier and a second destination address,
- in case the second destination address matches the translated source address and the second identifier matches the further deterministic identifier, translating the second destination address and the second identifier of the second data packet respectively into the first source address and the first identifier;
- forwarding the second data packet to the first network.

In a third aspect, a processing device for forwarding a first data packet from a first network to a second network is also disclosed. The processing device comprises:
- means for receiving the first data packet from the first network, the first data packet comprising a first source address of a protocol and a first identifier;
- means for determining a first deterministic identifier by a first deterministic operator on parameters comprising the first source address and the first identifier;
- means for forwarding the first data packet to the second network, wherein the first source address and the first identifier are translated into respectively a translated source address of the protocol and the first deterministic identifier.

According to another particularly advantageous variant, the processing device further comprises means for determining a second deterministic identifier of an address among a plurality of addresses of the protocol, by a second deterministic operator on the parameters, the translated source address corresponding to the determined second deterministic identifier.

According to another particularly advantageous variant, the first data packet further comprises a sequence number of a transport protocol, the method further comprising determining a third deterministic identifier by a third deterministic operator on the parameters and translating a part of the most significant bits of the sequence number into the determined third deterministic identifier.

In a fourth aspect, a backup device for recovering packet forwarding is also disclosed. The backup device comprises:
- receiving means for receiving an indication of a failure of a processing device, the processing device having:
   ∘ received a first data packet from a first network, the first data packet comprising a first source address of a protocol and a first identifier;
   ∘ determined a deterministic identifier from a deterministic operator on parameters comprising the first source address and the first identifier;
   ∘ forwarded the first data packet to a second network, wherein the first source address and the first identifier have been translated into respectively a translated source address of the protocol and the deterministic identifier;
   the receiving means being further configured for receiving a further first data packet from the first network, the further first data packet comprising the first source address of a protocol and the first identifier;
- means for determining the deterministic identifier from the deterministic operator on the parameters;
- means for forwarding the further first data packet to the second network, wherein the first source address and the first identifier have been translated into respectively the translated source address of the protocol and the deterministic identifier.

In a fifth aspect, a processing device is also disclosed. The processing device comprises:
- a first network interface configured to receive a first data packet from a first network, the first data packet comprising a first source address of a protocol and a first identifier;
- a processor configured to determine a first deterministic identifier by a first deterministic operator on parameters comprising the first source address and the first identifier;
- a second network interface configured to forward the first data packet to a second network, wherein the first source address and the first identifier are translated into respectively a translated source address of the protocol and the first deterministic identifier.

In a sixth aspect, a backup device is also disclosed. The backup device comprises:
- a first network interface configured to receive an indication of a failure of a processing device, the processing device having:
   ∘ received a first data packet from a first network, the first data packet comprising a first source address of a protocol and a first identifier;
   ∘ determined a deterministic identifier from a deterministic operator on parameters comprising the first source address and the first identifier;
   ∘ forwarded the first data packet to a second network, wherein the first source address and the first identifier have been translated into respectively a translated source address of the protocol and the deterministic identifier;
   the first network interface being further configured for receiving a further first data packet from the first network, the further first data packet comprising the first source address of a protocol and the first identifier;
- a processor configured to determine the deterministic identifier from the deterministic operator on the parameters;
- a second network interface configured to forward the further first data packet to the second network, wherein the first source address and the first identifier have been translated into respectively the translated source address of the protocol and the deterministic identifier.

In a seventh aspect, a computer program product for forwarding a first data packet from a first network to a second network is also disclosed. The computer program product comprises program code instructions executable by a processor for performing any of the method implemented in any of its variant.

In an eighth aspect, a computer program product for recovering packet forwarding is also disclosed. The computer program product comprises program code instructions executable by a processor for performing any of the method implemented in any of its variant.

In a ninth aspect, a non-transitory computer-readable storage medium storing computer-executable program instructions for is also disclosed. The computer-readable storage medium comprises instructions of program code executable by at least one processor to perform any of the two methods (packet forwarding, packet forwarding recovery) implemented in any of its variant.

While not explicitly described, the present embodiments may be employed in any combination or sub-combination. For example, the present principles are not limited to the described variants, and any arrangement of variants and embodiments can be used. Moreover, the present principles are not limited to the described deterministic operator examples and any other type of deterministic operator is compatible with the disclosed principles. The present principles are not further limited to the described communication protocols encapsulating an upper layer protocol and are applicable to any other communication protocols, encapsulating an upper layer protocol. The present principles are not further limited to the described mapping tables.

Besides, any characteristic, variant or embodiment described for a method is compatible with a device comprising means for processing the disclosed method, with a device comprising a processor configured to process the disclosed method, with a computer program product comprising program code instructions and with a computer-readable storage medium storing program instructions.

### 4. BRIEF DESCRIPTION OF THE DRAWINGS

- **Figures 1A** and **1B** illustrate two examples of packet forwarding between a first and a second networks according to two specific and non-limiting embodiments;
- **Figures 2A** **and** **2B** depict a method for forwarding a first data packet from a first network to a second network, according to two specific and non-limiting embodiments;
- **Figure 3** represents a processing device for forwarding a first data packet from a first network to a second network according to two specific and non-limiting embodiments;
- **Figure 4** represents an exemplary architecture of the processing device of figure 3 according to a specific and non-limiting embodiment.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to data packet forwarding from a first network to a second network. Data packets represent any set of data being transmitted between at least two (logical or physical) devices using any networking technology. Networking technology is to be understood with a broad scope including any type of communication protocol. For example, data link layer protocols such as belonging to the IEEE 802 family of protocols, network layer protocols, such as IPv4, IPv6, IPX, or any kind of upper layer protocols such as overlay network protocols are compatible with the disclosed principles. The first and the second networks represent any set of devices physically or logically coupled according to such a communication protocol of any type. For example, and without limitation, the first and/or the second network are an IEEE 802.3 network, a IEEE 802.11 BSS (basic service set), an IEEE 802.11 ESS (extended service set), a set of IEEE 802.11 BSS interconnected by a same delivery system (for instance Ethernet), an IPv4 network or subnetwork, an IPv6 network or subnetwork, and IPX network or subnetwork, an overlay network built over another network protocol such as for example a peer to peer overlay network of any kind.

In the disclosed principles, data packets represent any set of data being exchanged between at least two devices using a communication protocol of any type as previously mentioned, and wherein the set of data comprises at least a source address SA1, a destination address DA1 and a tag ID1, also called a first identifier. The source and the destination address of the communication protocol may be for example physical addresses or logical addresses and respectively represent the source and the destination of the data packet according to the communication protocol. The tag is a further identifier and depends for example on the communication protocol. In another example, the tag is a field of an encapsulated (upper layer) protocol of the communication protocol.

In the disclosed principles, the term "data flow" represents any set of successive data packets sharing a set of common characteristics, such as for example a same source address, a same identifier and/or a same destination address. A data flow represents a set of data packets belonging to a same connection or flowing between same (physical or logical) devices.

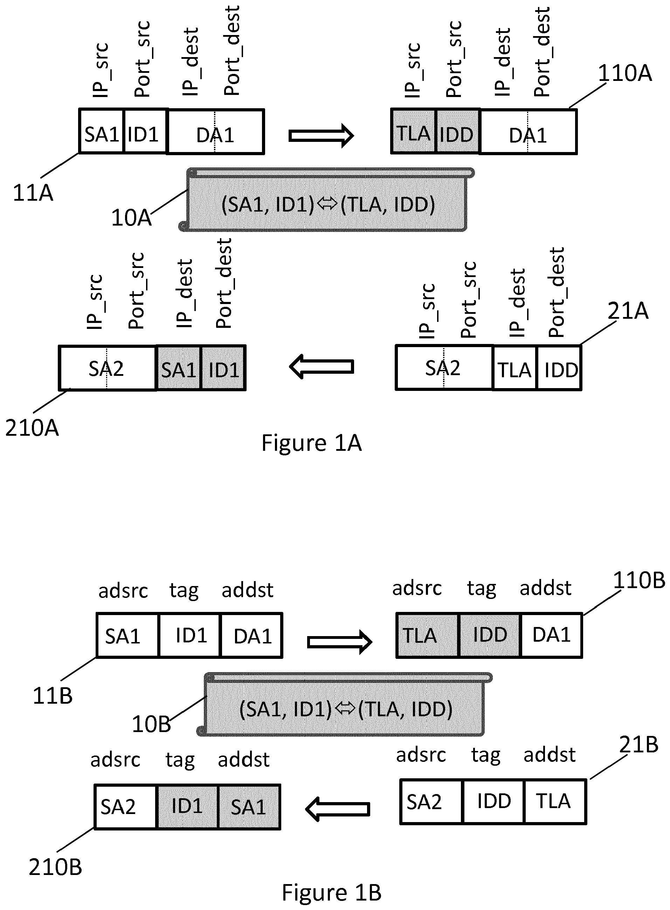

For the sake of clarity, and without limitation the disclosed principles will be described according to two non-limiting embodiments, illustrated in **Figure 1A** and **1B** and corresponding respectively to IPv4 and an IEEE 802.3 type of protocol.

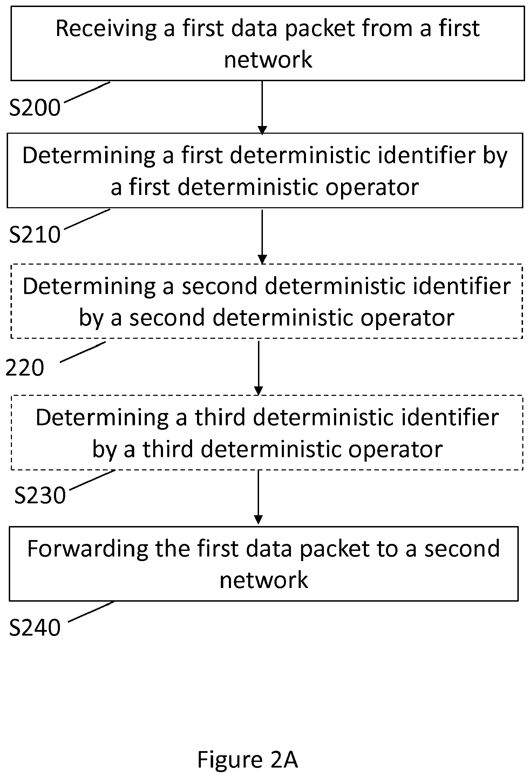

**Figure 2A** illustrates a method for forwarding a first data packet 11 A, 11 B from a first network to a second network, according to a first and non-limiting embodiment.

In the step S200, a first data packet 11A, 11 B is received from a first network, the first data packet comprising a first source address SA1 of a communication protocol, and a first identifier ID1.

In the step S210, a first deterministic identifier IDD is determined by a first deterministic operator on parameters comprising only the first source address SA1 and the first identifier ID1. In an optional and advantageous variant, the first data packet 11 A, 11B further comprising a first destination address DA1, the first deterministic identifier IDD is determined by the first deterministic operator on parameters comprising only the first source address SA1, the first identifier ID1, and the first destination address DA1. Including the first destination address DA1 in the parameters from which the first deterministic operator determines the first deterministic identifier IDD is advantageous as it increases the range of input values of the first deterministic operator and reduces the occurrence of conflicts (i.e, whenever a deterministic operator determines a same deterministic value from two different input values). Applying the first deterministic operator on a limited set of parameters, comprising only the first source address, the first identifier, and (optionally) the first destination address allows to preserve the determinism of the operation, ensuring that at a later stage, on a different device, the first deterministic operator applied to the same set of limited parameters will produce the same value of the first deterministic identifier.

In an advantageous embodiment, wherein several packet forwarding instances (i.e. devices) are used, a secret key K, common to all the packet forwarding instances is further used (i.e. included in the limited set of parameters for applying the first deterministic operator). Determining the first identifier by a first deterministic operator on only the first source address, the first identifier, the first destination address and the secret key is advantageous as it increases the resistance to first identifier guessing by adversaries. In case packet forwarding instances are further shared among multiple tenants, tenant identifiers are further advantageously included in the limited set of parameters of the first deterministic operator.

In a first variant, the first deterministic operator is a number generator seeded with the first source address, the first identifier and optionally the first destination address values. The number generator is for example a pseudo random number generator. A pseudo random process is a process that appears to be random but is not, exhibiting statistical randomness. Seeding a pseudo random generator with the only first source address, the first identifier (and optionally the first destination address values) allows to determine a deterministic first identifier.

In a second variant, the first deterministic operator is a hash function, being any function mapping data of arbitrary size (a set of possible keys) to data of fixed size (a set of indexes). In this second variant the first source address, the first identifier and optionally the first destination address values are for example concatenated into a key on which the hash function is applied to determine the first deterministic identifier. Any other deterministic operator applied to the first source address, the first identifier and optionally the first destination address values is compatible with the disclosed principles.

In the step S240, the first data packet 11 A, 11 B is forwarded to the second network, wherein the first source address SA1 of a communication protocol has been translated in a translated source address TLA of the same communication protocol, and the first identifier ID1 has been translated in the first deterministic identifier IDD. Address translating means replacing a value of a field of the packet by another value prior to sending to the second network. Said differently, a first translated data packet 110A, 110B is obtained from the first data packet 11A, 11B by translating the first source address value SA1 of the source address field of the first data packet into a translated source address value TLA, and by translating the first identifier ID1 value of the identifier field of the first data packet into the first deterministic identifier value IDD. The first translated data packet 110A, 110B is further forwarded to the second network. In the other direction, the method further comprises receiving a second data packet from the second network, the second data packet comprising a second source address, a second identifier and a second destination address. In case the second destination address matches the translated source address and the second identifier matches the first deterministic identifier, the second destination address and the second identifier of the second data packet are translated into respectively the first source address and the first identifier, the second data packet being then forwarded back the first network. In case the second destination address and the second identifier do not match any mapping table entry of the packet forwarding device, the second data packet is dropped.

It shall be noted that translating the source address of a communication protocol by another address (i.e. a translated source address) of the same communication protocol allows using the packet forwarding method inside a network of a communication protocol, and not as a protocol translator between two networks using two different communication protocols.

The disclosed packet forwarding method is further advantageous as replacing the source address value of a communication protocol by a translated source address of the same communication protocol, allows to provide isolation, privacy and/or address mutualisation, while being able to translate back to the first network any second data packet coming from the second network as an upper layer protocol response to the first data packet, as it is known for example in IPv4 NAT. The packet forwarding method is further advantageous as the first deterministic identifier is deterministically obtained from only the first source address, the first identifier and (optionally) the first destination address. Therefore, at a later stage, for example during a recovery procedure of a failure of a packet forwarding device (i.e. a processing device implementing the packet forwarding method), the first deterministic identifier IDD can be regenerated at the same value by a backup device, without requiring the backup device to share and maintain the state of the packet forwarding device prior to failure. Indeed, in case a further first data packet is received, the further first data packet belonging to a same data flow as the first data packet, the first data packet being received and forwarded by the packet forwarding device prior to failure, the further first data packet being received by the backup device after the failure of the packet forwarding device, the first data packet and the further first data packet comprising a same source address value SA1 and a same first identifier value ID1 (because belonging to a same data flow), the backup device can regenerate the same value of the first deterministic identifier as the packet forwarding device did before the failure, by applying the same first deterministic operator to the same parameters, extracted from the further first data packet. In other words, whenever the backup device becomes active and receives packets from an existing connection, it can recover the decision that was taken by the former packet forwarding device without requiring explicit information from the former packet forwarding device. This allows the backup device to recover the state from the departed packet forwarding device. Consequently, there is no need for a replication protocol (saving implementation costs) and no need for pro-active state replication (saving memory/CPU/network bandwidth).

### IPv4 embodiment

Referring to **Figure 1A**, illustrating the **IPv4 non-limiting embodiment**, the first and the second networks are IPv4 networks or subnetwork. The first data packet 11A is thus an IPv4 data packet carrying an upper layer transport protocol such as for example and without limitation TCP (Transport Control Protocol) or UDP (User Datagram Protocol) using ports for further differentiating flows and/or connections. The first data packet 11 A comprises a first source address value SA1 of four bytes in the source address field noted *IP_src* in Figure 1A, and corresponding to the IP source address of the IPv4 header. The first data packet 11A further comprises a first identifier value ID1 of two bytes in the identifier field of the first data packet 11A and corresponding to the source port field *ort_src* of the carried transport layer protocol (TCP, UDP, other) header, according to the IPv4 non-limiting embodiment. The first data packet 11A further comprises a first destination address value DA1 value of six bytes, corresponding to a concatenation of the destination IP address value and the destination port (of the upper transport protocol) value, respectively located in the destination IP address field *IP dest* of the IPv4 header and the destination port field *Port_dest* of the carried transport layer protocol (TCP, UDP, other) header. As a first data packet 11 A is received, a first deterministic identifier IDD is determined by a first deterministic operator of the IPv4 source address, the source port, and optionally the destination IPv4 address and/or the destination port. The first data packet 11 A is forwarded to the second network as a forwarded first data packet 110A, the source IPv4 address being translated into a translated IPv4 address, for example a public, routable IPv4 address, and the source port being translated into the first deterministic identifier. The first deterministic identifier corresponds to the translated source port according to the non-limiting IPv4 embodiment. A mapping table entry 10A is created in a mapping table to reflect the mapping between the first source address SA1 and the first identifier ID1 values on one hand, and the translated source address TLA and the first deterministic identifier IDD values on the other hand. The mapping table is stored, for example in a memory, for operating reverse translations later. Indeed as a second data packet 21A is received from the second network being for example, an upper layer protocol response to the first data packet 10A, the second data packet 21 A comprising the translated source address TLA value in the destination IP address field of the IPv4 header, and the first deterministic identifier IDD in the destination port field of the UDP or TCP header, the mapping table entry 10A is retrieved from the mapping table in memory so as to translate back the translated source address TLA into the first source address SA1 in the destination IPv4 address field, and the first deterministic identifier into the first identifier in the destination port of the forwarded second data packet 210A. Note that the source address SA2 of the second data packet 21 A, which corresponds to the source IPv4 address and the source port values of the second data packet are forwarded back to the first network in the corresponding source IPv4 address and port fields of the second forwarded packet 210A without any modification. In a first variant, the second data packet 21 A (response packet) uses as a source port the same port that was used as destination in the first data packet 11 A (request packet). In a second variant, the second data packet 21 A (response packet) uses at least one different port unambiguously calculable from the source port of the first data packet. Unambiguous calculation for example comprises incrementing or decrementing the source port by one. The second variant is applicable to upper layer protocols for example including but not limited to SIP (Session Initiation Protocol), FTP (File Transfer Protocol), or RTP (Real Time Protocol).The behaviour of the IPv4 NAT is preserved in the disclosed principles. Whenever a new flow of packets is identified (outgoing packets, UDP or TCP Syn), a public IP and a public port is chosen so that there is no conflict with previously existing connections. This choice is recorded so that the other outgoing packets belonging to this flow can be rewritten identically to the initial packet (private -> public) and so that incoming packets can undergo the inverse transformation (public -> private). This allows multiple devices from a private network to share a single IPv4 address in the public network. The disclosed principles differ from known methods in the way ports are chosen. IETF RFC 6056 describes frequent practice for choosing ephemeral port numbers and in all cases the choice does not depend *only* on the connection being established but also on the history/past/order of connection establishment and possibly, some other source of entropy. Consequently, in the prior art methods, the choice is not "deterministic" and replication is needed for preserving NAT across failures of packet forwarding devices. In the disclosed principles, the public source port (first deterministic identifier) is derived only from the private IP address, private port, destination IP address and destination port. As previously mentioned for further resistance to port guessing by adversary, a secret K common to all NAT instances may also be used. If the NAT instance is shared among tenants, the tenant identifier may also be used.

### Ethernet embodiment

Referring to **Figure 1B**, another non-limiting embodiment, corresponding to an IEEE 802.3 type of protocol is illustrated. The IEEE 802.3 type of protocol embodiment is further called **Ethernet embodiment** for the sake of clarity although it is applicable to any data link protocol of the IEEE 802 family of protocols. According to the Ethernet embodiment (Figure 1 B), the first network and the second networks are Ethernet networks. The first data packet 11 B is thus an Ethernet data packet carrying an encapsulated (i.e. upper layer) protocol such as for example and without limitation IEEE 802.1q protocol that introduces virtual local area network (VLAN) tagging in Ethernet networks for further differentiating flows and/or connections. The first data packet 11B comprises a first source address value SA1 of six bytes in the source address field noted ad*src* in Figure 1B, and corresponding to the Ethernet source MAC address of the Ethernet header. The first data packet 11B further comprises a first identifier value ID1 in the identifier field of the first data packet 11B. According to the Ethernet embodiment, the first identifier value is any part of the four-bytes tag field defined by the IEEE 802.1q standard. Advantageously the first identifier value ID1 is the value of the twelve bits VLAN identifier field, but any other bit-field further allowing to differentiate data flows is compatible with the disclosed principles. The first data packet 11 B further comprises a first destination address value DA1 value of six bytes, corresponding to the destination MAC address field of the first data packet 11 B. As a first data packet 11 B is received, a first deterministic identifier IDD is determined by a first deterministic operator of the MAC source address, the VLAN tag port, and optionally the destination MAC address. The first data packet 11 A is forwarded to the second network as a forwarded first data packet 110B, the source MAC address being translated into a translated MAC address, and the VLAN tag being translated into the first deterministic identifier. A mapping table entry 10B is created in a mapping table to reflect the mapping between the first source address SA1 and the first identifier ID1 values on one hand, and the translated source address TLA and the first deterministic identifier IDD values on the other hand. The mapping table is stored, for example in a memory, for operating the reverse translations later. Indeed as a second data packet 21 B is received from the second network, being for example an upper layer protocol response to the first data packet 10B, the second data packet 21 B comprising the translated source address TLA value in the destination MAC address field of the Ethernet header, and the first deterministic identifier IDD in the VLAN tag field of the IEEE 802.1 q header, the mapping table entry 10B is retrieved from the mapping table in memory so as to translate back the translated source address TLA into the first source address SA1 in the destination MAC address field, and the first deterministic identifier into the first identifier in the VLAN tag field of the IEEE 802.1q header of the forwarded second data packet 210A. Note that the source address SA2 of the second data packet 21A, which corresponds to the source MAC address of the second data packet is forwarded back to the first network in the corresponding source MAC address field of the second forwarded packet 210A without any modification.

IPv4 and Ethernet embodiments are only exemplary and non-limiting embodiments, and any communication protocol defining a source, a destination and an identifier embedded in an encapsulated protocol (for further data flow differentiation) are compatible with the disclosed principles.

### Improving resistance to conflicts

A side effect of these advantageous method is that multiple different connections to a given destination address may be mapped to an identical first deterministic identifier by the first deterministic operator. This situation, called a conflict, produces the same effect as an unrecovered connection after a device failure. A co-occurrence of a packet forwarding device failure and a conflict will remain a very rare event so that the disclosed principles improves the efficiency of packet forwarding methods for a very large fraction of connections. Here below are two embodiments improving the resistance to conflicts of the disclosed principles by reducing their occurrence probability.

According to a specific and non-limiting embodiment, a plurality of addresses is available to the packet forwarding method for translating the first source address into one address of the plurality of addresses. In the previous description, a single translated source address TLA was available to the packet forwarding method.

Referring to **Figure 2A**, in an optional step S210, a second deterministic identifier is determined by a second deterministic operator of the first source address, the first identifier and optionally the first destination address values. The second deterministic identifier corresponds for example to the index of an address among the plurality of available addresses. The first source address is translated according to the second deterministic identifier. In other words, the translated source address inserted in the forwarded packet corresponds to the index (the second deterministic identifier) determined by the second deterministic operator on the first source address, the first identifier and optionally the first destination address values. Selecting the translated source address from a second deterministic operator applied to the same parameters is advantageous as it further expands the size of the deterministic operation output, further reducing the occurrence of a conflict.

According to yet another specific and non-limiting embodiment, the first data packet further comprises a sequence number of an encapsulated transport protocol (for example the sequence number of TCP packets). This embodiment is compatible with any of the IPv4 or Ethernet embodiments. In an optional step 230, a third deterministic identifier is determined by a third deterministic operator on the first source address, the first identifier and optionally the first destination address values. According to this embodiment, as the first data packet is forwarded in the step S240, a part of (for example one, two or three of) the most significant bits of the sequence number are further translated into the third deterministic identifier. The most significant bits of the TCP sequence number of a first data packet are rewritten with the third deterministic identifier when forwarded to the second network, and the most significant bits of the acknowledgment number are restored when coming in from the second network towards the first network. For example, an offset corresponding to the difference between the sequence number of the first data packet and the third deterministic identifier is stored as part of the mapping information for that connection / flow. The offset is further used to restore the sequence number to its initial value while forwarding back to the first network a second data packet received from the second network as a response to the first data packet.

This embodiment advantageously uses the fact that most of TCP connections are short connections, and that the most significant bits of the sequence numbers remain unchanged throughout the connection. This embodiment uses these most significant bits to extend the range of values that can be used by the deterministic operators. It shall be noted that for long connections (i.e. connections with large amount of data), the sequence number may wrap and the most significant bits may change, making them less appropriate to the disclosed principles. The method further comprises optionally monitoring the traffic profile and using this embodiment in case no long connections are detected in the monitored traffic.

As for the previous embodiment (with a plurality of translated source addresses), determining a third deterministic identifier and translating a part of the sequence number is advantageous as it further reduces the occurrence of conflicts of the deterministic operations (first, second, third).

In a first variant, the first, second and third deterministic operators are based on a same deterministic operator (i.e. a same number generator, or a same hash function, depending on the variant), generating a single deterministic identifier value of the first source address, the first identifier and optionally the first destination address, wherein each of the first, second and third deterministic identifiers is a different and non-overlapping part of the single deterministic identifier value. For example, the single deterministic identifier value is a 32 bits value, and the first deterministic identifier is the 16 low significant bits (B0-B15), the second deterministic identifier is the next 2 bits (B16-B17), the third deterministic identifier is the next 3 bits (B18-B20). Any other mapping of bits from a single deterministic identifier value to a first, second and third non-overlapping parts corresponding respectively to the first, second and third deterministic identifiers are compatible with the disclosed principles.

In a second variant, the first, second and third deterministic operators are based on a same number generator seeded by the first source address, the first identifier and optionally the first destination address, and using a different salt. More precisely the first, second and third deterministic identifiers are determined by the same number generator seeded by the same seed (first source address, the first identifier and optionally the first destination address), and respectively using a first, a second and a third salt.

In a third variant the first, second and third deterministic operators are based on a same hash function applied to the first source address, the first identifier and optionally the first destination address, also using a different salt. More precisely the first, second and third deterministic identifiers are determined by a same hash function of the first source address, the first identifier and optionally the first destination address, respectively using a first, a second and a third salt. In any of the second and third variant, the salt is a value (e.g., 1, 2, 3) which is an additional input parameter to the (first, second, third) deterministic operator, it is for example appended (concatenated) to the first source address, the first identifier and optionally the first destination address for seeding, or for hashing. The salts are identical on all devices (packet forwarding devices and backup devices as further described).

In a fourth variant, the first, second and third deterministic operators are based on a different deterministic operator (i.e. different number generators, and/or different hash functions).

### Dealing with conflicts

The reliability of the disclosed principles directly depends on the existence of conflicts. Indeed, the only source of non-determinism in deterministic identifiers (ports) allocation is the order in which first data packets for conflicting connections are handled by the packet forwarding device. As previously mentioned, a conflict (i.e. conflicting connections) is a situation where a first (optionally second/) deterministic identifier, being determined according to any variant and/or embodiment, collides with a previous first (opt. second/third) deterministic identifier previously determined from the first (opt. second/third) deterministic operator on previous parameters, being different from the parameters.

More precisely, as a first (second/third) deterministic identifier is determined according to any variant and/or embodiment (on reception of a first data packet of a first connection / data flow), an entry is created in the mapping table. According to a first variant the mapping table entry comprises the first/second/third deterministic identifier in relation to the first source address. According to that first variant, a conflict occurs in a situation where a data packet of a second data flow is received from the first network (with a different first source address, first identifier and first destination address), and for which the first (second/third) deterministic operator determines a value of a first (second/third) deterministic identifier already present in the mapping table for a first connection / data flow.

According to a second variant, the mapping table entry comprises the first/second/third deterministic identifier in relation to the first source address and *the first destination address*. Storing the first destination in the mapping table entry allows to disambiguate connections with a same first/second/third deterministic identifier value but different first destination address values. According to that second variant, a conflict occurs in a situation where a data packet of a second data flow is received from the first network, with a different first source address, first identifier but a same first destination address, and for which the first (second/third) deterministic operator determines a value of a first (second/third) deterministic identifier already present in the mapping table for a first connection / data flow. Any other variant of conflicts wherein conflicting values of a first/second/third identifier values are obtained for packets of different data flows / connection, are compatible with the disclosed principles.

In a conflicting situation according to any variant, a further first/second/third deterministic identifier is optionally determined, different from the first/second/third deterministic identifier, and not already present in the mapping table of the packet forwarding device, the first identifier of the further first data packet being translated with the further first deterministic identifier.

Advantageously, the packet forwarding device further sends to a backup device an information item describing the conflicting situation, only is case of a conflict. This is different from known replication based methods wherein mapping table entries are sent/synchronized between a packet forwarding device and a backup device whenever they are created. The information item describing the mapping conflict for example comprises the previous parameters (previous first source address, previous first identifier, previous first destination address related to the previous connection / data flow) associated with the first/second/third deterministic identifier, and the parameters (first source address, first identifier, first destination address related to the current conflicting connection / data flow) associated with the further deterministic identifier. In case a new entry is created in the mapping table because a first data packet is received from a new connection / data flow of the first network, no synchronization/replication data is sent to any backup device, contrary to the known prior art methods.

For the sake of clarity and without loss of generality, the mapping table 10A, 10B is described as a symmetric table. More precisely an entry in the mapping table allows to associate at least a first source address and a first identifier (SA1, ID1) to a (first/second/third) deterministic identifier IDD. A symmetric table means that the table can be queried with a (first/second/third) deterministic identifier IDD to retrieve a corresponding first source address and first identifier (SA1, ID1), and that the table can also be queried with a first source address and a first identifier (SA1, ID1) to retrieve a corresponding (first/second/third) deterministic identifier IDD. In the optional variant, wherein the first destination address is used to further disambiguate two identical values of the (first/second/third) deterministic identifier, the first destination address is stored with the (first/second/third) deterministic identifier.

According to a specific and non-limiting embodiment, the mapping table is a symmetric table comprising two unidirectional tables, called the forward table and the backward table. The forward table for example allows to retrieve a (first/second/third) deterministic identifier by querying the forward table with a first source address and a first identifier. The backward table for example allows to retrieve a first source address and a first identifier (SA1, ID1) by querying the backward table with a (first/second/third) deterministic identifier (and an optional first destination address). For example, the forward and the backward tables are hash tables. According to this embodiment, creating an entry in the mapping table comprises creating an entry in each of the unidirectional tables. According to this embodiment, a conflict can be detected by either querying the forward table with the first source address and the first identifier to check whether there is an existing entry for these values, or by determining the (first/second/third) deterministic identifier (by applying the first/second/third deterministic operator) and querying the backward table with the determined (first/second/third) deterministic identifier, looking for a corresponding existing entry.

According to an advantageous and non-limiting embodiment, the forward table stores only conflicting entries. A backward table is stored as for the previous embodiment, but the forward table of the previous embodiment is reduced to only the conflicting entries (i.e. wherever a further first/second/third deterministic identifier is determined). The backward table is advantageously used for both detecting conflicts and forwarding packets back from the second network to the first network. According to this embodiment, each time a first packet is received from the first network a (first/second/third) deterministic identifier is determined, even if this is not the initial packet of the data flow. A conflict is detected in case an existing entry is present in the backward table for a determined first/second/third deterministic identifier. This embodiment advantageously needs less memory as only a single table is stored in memory.

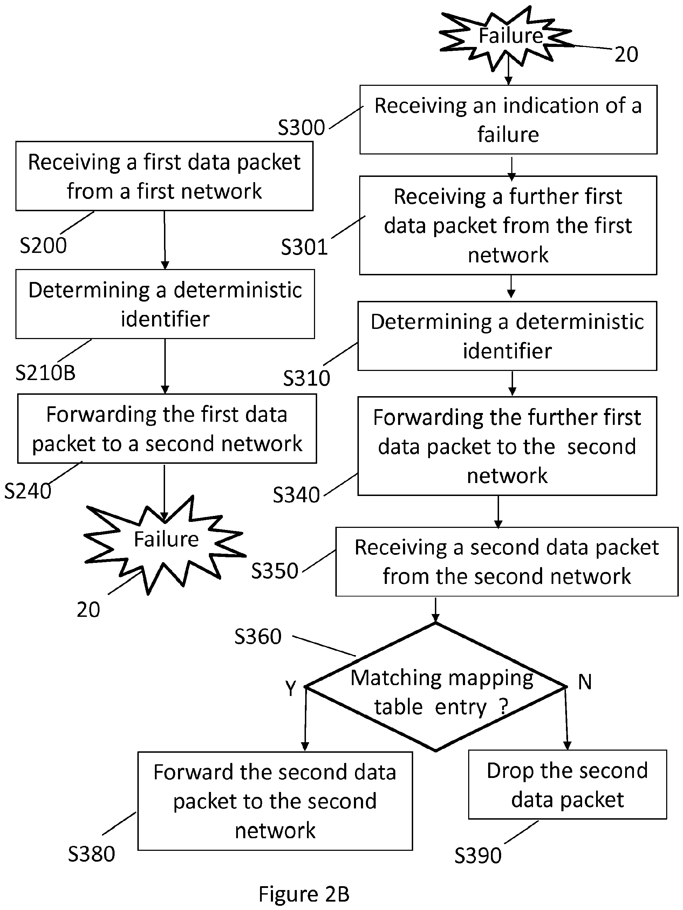

Figure 2B illustrates a method for forwarding a first data packet 11 A, 11 B from a first network to a second network, according to a second and non-limiting embodiment.

In the step S200, a first data packet 11 A, 11 B is received by a packet forwarding device, from a first network, the first data packet comprising a source address SA1 of a communication protocol, and a first identifier ID1. In the step S210B a deterministic identifier is determined from a deterministic operator on parameters comprising only the first source address, the first identifier and optionally the first destination address. The deterministic identifier and the deterministic operator of the step S210B corresponds to any arrangement of respectively the first/second/third deterministic identifiers and the first/second/third deterministic operators. In the optional variant, where conflicting situations are detected and handled, as previously described, the step S210B comprises an initial sub-step of looking for an existing entry in the mapping table comprising the first source address, the first identifier and optionally the first destination address (prior to determining the first/second/third deterministic identifiers). In case no such entry is existing in the mapping table, a (first/second/third) deterministic identifier is determined according to any variant described above and a corresponding new entry is created in the mapping table. In case such an entry is already existing in the mapping table (representative of a conflicting situation), a further first/second/third deterministic identifiers are determined according to any variant described above, and a corresponding further new entry is created in the mapping table. In the step S240, the first data packet is forwarded by the packet forwarding device to the second network, wherein the first source address and the first identifier have been translated into respectively a translated source address of the communication protocol and the deterministic identifier.

A failure 20 occurs. The failure is for example a hardware failure of the packet forwarding device. In the step S300, a backup device receives an indication of a failure 20 of the packet forwarding device. In a first example, the failure 20 is detected by a system supervising entity, which starts the backup device and sends the indication of failure of the packet forwarding device to the backup device. In another example, the backup device is regularly checking the packet forwarding device is up and running by for example regularly sending a request to the packet forwarding device and waiting for a response. The reception of the indication of failure of the packet forwarding device corresponds to a lack of response after having sent a request. Any technique for detecting a failure of the packet forwarding device and sending an indication of its failure to a backup device is compatible with the disclosed principles.

In the step S301, a further first data packet is received by the backup device from the first network, wherein the further first data packet belongs to a same connection / data flow as a previous first data packet previously forwarded by the packet forwarding device prior to its failure. As belonging to a same data flow / connection, the further first data packet comprises the same first source address, the first identifier and first destination address values as the first data packet.

In the step S310 the deterministic identifier, previously determined (in the step S210B) by the packet forwarding device prior to failure is determined by the backup device from the deterministic operator on the first source address, the first identifier and optionally the first destination address values. Any variant and/or embodiment applicable to the packet forwarding device is applicable to the backup device.

In the step S340, the further first data packet is forwarded by the backup device to the second network, wherein the first source address and the first identifier have been translated into respectively the translated source address of the communication protocol and the deterministic identifier, according to any variant.

In the step S350, a second data packet is received by the backup device from the second network, the second data packet comprising a second source address, a second identifier and a second destination address.

In the step S360, it is determined whether the mapping table of the backup device comprises a matching entry for the second data packet. In case the second destination address and the second identifier respectively match a translated source address and a first deterministic identifier of a mapping table entry, the second destination address and the second identifier of the second data packet are respectively translating into the first source address and the first identifier according to the mapping table of the backup device, and the second data packet is forwarded to the first network by the backup device in the step S380. In case the mapping table of the backup device does not comprise any matching entry for the second data packet, the second data packet is dropped by the backup device in the step S390.

In a specific and non-limiting embodiment, prior to the packet forwarding device failure, the backup device received from the packet forwarding device an information item representative of a deterministic operator conflict between the parameters and previous parameters (comprising a previous first source address, a previous first identifier and a previous first destination address) according to any variant previously described. The information item for example comprises the first source address, the first identifier and the first destination address associated with the further deterministic identifier. In addition, and optionally, the information item further comprises the previous parameters associated with the deterministic identifier. Embedding the previous parameters associated with the deterministic identifier in the information item is optional as the deterministic identifier (corresponding to the previous parameters) can be regenerated by the backup device applying the deterministic operator to the previous parameters.

The backup device, upon receiving the information item creates an entry in the mapping table, corresponding to the first source address, the first identifier and the first destination address associated with the further deterministic identifier. In case a single translated source address is available to the packet forwarding device, there is no need to store the single translated source address in the table entry. In case a plurality of addresses is available to the translated source address, the index of the address, being the second deterministic identifier is also stored in the table entry, allowing to retrieve the corresponding translated source address.

As the backup device receives a second data packet from the second network, the second data packet comprising a second source address, a second identifier and a second destination address, the backup device determines whether its mapping table comprises a matching entry (i.e. an entry with the second identifier and the second destination address). In case the mapping table comprises an entry for which the deterministic identifier and (depending on the variant) a corresponding translated source address match respectively the second identifier and the second destination address, the second destination address and the second identifier of the second data packet are translated into the respectively the first source address and the first identifier of the matching entry, and the second data packet is forwarded to the first network. Otherwise (in case of no matching entry), the second data packet is dropped by the backup device.

The disclosed principles are advantageous as they allow a backup device to recover from a failure of a packet forwarding device, by maintaining packet forwarding and address translations of data flows / connections that were created by the packet forwarding device prior to failure, with minimal service disruption and minimal traffic overhead (between the packet forwarding device and the backup device).

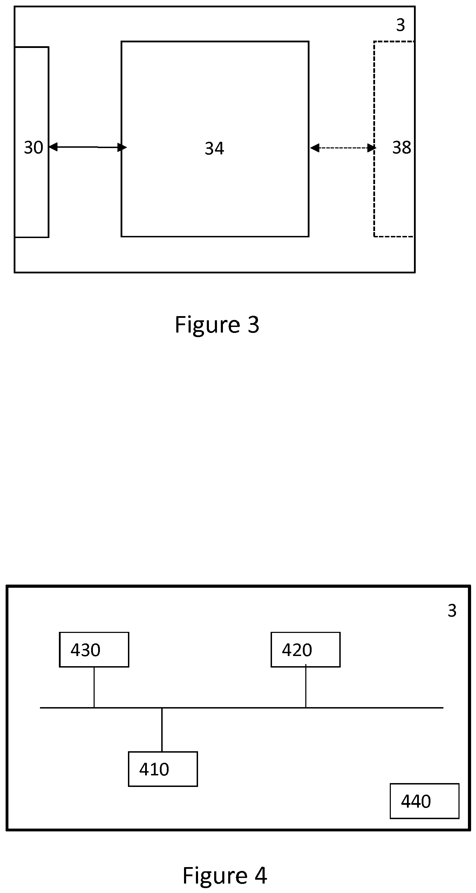

Figure 3 depicts a processing device 3 for forwarding a first data packet from a first network to a second network implementing the method described at figure 2A and/or 2B. According to different embodiments, the processing device is a packet forwarding device or a backup device for recovering packet forwarding. According to a specific and non-limiting embodiment of the principles, the processing device 3 comprises at least one first network interface 30, configured to receive the first data packet from the first network, the first data packet comprising a first source address of a communication protocol and a first identifier.

According to a specific and non-limiting embodiment of the principles, the processing device 3 further comprises at least one second network interface 38, configured to receive a second data packet from the second network, the second data packet comprising a second source address of a communication protocol a second identifier, and a second destination address.

The first 30 and the second 38 network interfaces are linked to a processing module 34 configured to determine a first deterministic identifier by a first deterministic operator on parameters comprising the first source address and the first identifier. The processing module 34 is further configured to translate the first source address and the first identifier into respectively a translated source address of the communication protocol and the first deterministic identifier. The processing module 34 is further configured to forward the translated first data packet to the second network via the second network interface 38. The processing module 34 is further configured to determine upon a reception of the second data packet, whether the second destination address and the second identifier of the received second data packet match respectively the translated source address and the first deterministic identifier. The processing module 34 is further configured to translate the second destination address and the second identifier of the second data packet respectively into the first source address and the first identifier in case the second destination address and the second identifier respectively match the translated source address and the first deterministic identifier. The processing module 34 is further configured to forward the translated second data packet to the first network via the first network interface 30.

According to different embodiments of the disclosed principles, the first 30 and the second 38 network interfaces 30 belongs to a set comprising:
- a WAN (Wide Area Network) interface such a 2G/3G/4G cellular networks, WiMax interface, xDSL, FFTx;
- a wireless LAN (Wireless Local Area Network) interface such as Bluetooth, WiFi in any flavor, or any kind of wireless interface of the IEEE 802 family of network interfaces;
- a wired LAN (Local Area Network) interface such as Ethernet, IEEE 802.3 or any wired interface of the IEEE 802 family of network interfaces.
- A wired bus interface such as USB, FireWire, or any kind of wired bus technology.

According to different embodiments of the disclosed principles, the first 30 and the second 38 network interfaces 30 further support a communication protocol belonging to a set comprising:
- Data link protocols such as for example any MAC protocol of the 802 family of protocols, including Ethernet;
- Network layer protocols such as for example IPv4, IPv6, IPX, ...
- Overlay network protocols built on top of other network protocols such as for example peer to peer networks of any type.

More generally any network interface and any communication protocol physically or logically coupling devices are compatible with the disclosed principles.

Figure 4 represents an exemplary architecture of the processing device 3 according to a specific and non-limiting embodiment, where the processing device 3 is configured to forward a first data packet from a first network to a second network. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carrying out the processing method described with reference to figures 2A and/or 2B. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).

According to exemplary and non-limiting embodiments, the processing device 3 belongs to a set comprising:
- a gateway;
- a router;
- a communication device;
- a desktop computer;
- a server;
- a cloud computing instance.

## Claims

1. A method for forwarding a first data packet (11 A, 11 B) from a first network to a second network, the method comprising:
- receiving (S200) the first data packet (11 A, 11 B) from the first network, the first data packet (11 A, 11 B) comprising a first source address (SA1) of a protocol and a first identifier (ID1);
- determining (S210) a first deterministic identifier (IDD) by a first deterministic operator on parameters comprising the first source address (SA1) and the first identifier (ID1);
- forwarding (S240) the first data packet to the second network, wherein the first source address (SA1) and the first identifier (ID1) are translated into respectively a translated source address (TLA) of the protocol and the first deterministic identifier (IDD).

2. The method according to claim 1, wherein the first data packet further comprises a first destination address (DA1), the parameters further comprising the first destination address (DA1).

3. The method according to any of claims 1 to 2, further comprising determining (S220) a second deterministic identifier of an address among a plurality of addresses of the protocol, by a second deterministic operator on the parameters, the translated source address (TLA) corresponding to the determined second deterministic identifier.

4. The method according to any of claims 1 to 3, wherein the first data packet further comprises a sequence number of a transport protocol, the method further comprising determining (S230) a third deterministic identifier by a third deterministic operator on the parameters and translating a part of the most significant bits of the sequence number into the determined third deterministic identifier.

5. The method according to any of claims 1 to 4, wherein the first deterministic operator is number generator seeded with the parameters.

6. The method according to any of claims 1 to 4, wherein the first deterministic operator is a hash function of the parameters.

7. The method according to any of claims 1 to 6, wherein in case the first deterministic identifier collides with a previous first deterministic identifier, previously determined from the first deterministic operator on previous parameters, being different from the parameters, a further first deterministic identifier is determined, different from the first deterministic identifier, the first identifier being translated with the further first deterministic identifier.

8. The method according to claim 7, further comprising sending an information item to a backup device only in case the first deterministic identifier collides with the previous first deterministic identifier, the information item comprising the parameters associated with the further deterministic identifier.

9. A method, implemented in a backup device, for recovering packet forwarding, the method comprising:
- receiving (S300) an indication of a failure of a processing device, the processing device having:
∘ received (S200) a first data packet (11 A, 11 B) from a first network, the first data packet (11 A, 11 B) comprising a first source address (SA1) of a protocol and a first identifier (ID1);
∘ determined (S210B) a deterministic identifier from a deterministic operator on parameters comprising the first source (SA1) address and the first identifier (ID1);
∘ forwarded (S240) the first data packet to a second network, wherein the first source address (SA1) and the first identifier (ID1) have been translated into respectively a translated source address (TLA) of the protocol and the deterministic identifier;
- receiving (S301) a further first data packet from the first network, the further first data packet comprising the first source address (SA1) of a protocol and the first identifier (ID1);
- determining (S310) the deterministic identifier from the deterministic operator on the parameters;
- forwarding (S340) the further first data packet to the second network, wherein the first source address (SA1) and the first identifier (ID1) have been translated into respectively the translated source address (TLA) of the protocol and the deterministic identifier.

10. The method according to claim 9, further comprising:
- receiving from the processing device, prior to the processing device failure, an information item representative of a deterministic operator conflict between the parameters and previous parameters, the information item comprising the first source address and the first identifier associated with the further deterministic identifier;
- receiving (S350) a second data packet (21 A, 21 B) from the second network, the second data packet (21 A, 21 B) comprising a second source address, a second identifier and a second destination address,
- in case the second destination address matches the translated source address and the second identifier matches the further deterministic identifier, translating the second destination address and the second identifier of the second data packet respectively into the first source address and the first identifier;
- forwarding (S380) the second data packet to the first network.

11. A processing device (3) for forwarding a first data packet (11A, 11B) from a first network to a second network, the device comprising:
- means (30) for receiving the first data packet (11A, 11B) from the first network, the first data packet (11A, 11B) comprising a first source address (SA1) of a protocol and a first identifier (ID1);
- means (34) for determining a first deterministic identifier (IDD) by a first deterministic operator on parameters comprising the first source address (SA1) and the first identifier (ID1);
- means (38) for forwarding the first data packet to the second network, wherein the first source address (SA1) and the first identifier (ID1) are translated into respectively a translated source address (TLA) of the protocol and the first deterministic identifier (IDD).

12. The processing device according to claim 11 further comprising means for determining a second deterministic identifier of an address among a plurality of addresses of the protocol, by a second deterministic operator on the parameters, the translated source address (TLA) corresponding to the determined second deterministic identifier.

13. The processing device according to any of claims 11 to 12, wherein the first data packet further comprises a sequence number of a transport protocol, the method further comprising determining (S230) a third deterministic identifier by a third deterministic operator on the parameters and translating a part of the most significant bits of the sequence number into the determined third deterministic identifier.

14. A backup device for recovering packet forwarding, the backup device comprising:
- receiving means (30) for receiving an indication of a failure of a processing device, the processing device having:
∘ received a first data packet (11A, 11B) from a first network, the first data packet (11A, 11B) comprising a first source address (SA1) of a protocol and a first identifier (ID1);
∘ determined a deterministic identifier from a deterministic operator on parameters comprising the first source (SA1) address and the first identifier (ID1);
∘ forwarded the first data packet to a second network, wherein the first source address (SA1) and the first identifier (ID1) have been translated into respectively a translated source address (TLA) of the protocol and the deterministic identifier;
the receiving means (30) being further configured for receiving a further first data packet from the first network, the further first data packet comprising the first source address (SA1) of a protocol and the first identifier (ID1);
- means (34) for determining the deterministic identifier from the deterministic operator on the parameters;
- means (38) for forwarding the further first data packet to the second network, wherein the first source address (SA1) and the first identifier (ID1) have been translated into respectively the translated source address (TLA) of the protocol and the deterministic identifier.

15. A computer program product for forwarding a first data packet (11A, 11B) from a first network to a second network, the computer program product comprising program code instructions executable by a processor for:
- receiving (S200) the first data packet (11A, 11B) from the first network, the first data packet (11A, 11B) comprising a first source address (SA1) of a protocol and a first identifier (ID1);
- determining (S210) a first deterministic identifier (IDD) by a first deterministic operator on parameters comprising the first source address (SA1) and the first identifier (ID1);
- forwarding (S240) the first data packet to the second network, wherein the first source address (SA1) and the first identifier (ID1) are translated into respectively a translated source address (TLA) of the protocol and the first deterministic identifier (IDD).
